# EUROPEAN PATENT SPECIFICATION

(11) **EP 3 120 952 B1**
(45) Date of publication and mention of the grant of the patent: **10.07.2019**
(21) Application number: 16180416.6
(22) Date of filing: 20.07.2016
(51) Int. Cl.: B21J 15/04, F16D 1/072, F16D 1/08, F16B 7/18

(54) **METHOD FOR JOINING A TUBE AND A SOLID PIECE FOR A TORQUE TRANSMISSION SHAFT**
VERFAHREN ZUR VERBINDEN EINES ROHRES MIT EINEM FESTEN WERKSTÜCK FÜR EINE DREHMOMENTÜBERTRAGUNGSWELLE
PROCEDE D'ASSEMBLAGE D'UN TUBE AVEC UNE PIECE MASSIVE POUR UN ARBRE DE TRANSMISSION DE COUPLE

(30) Priority: 22.07.2015 TR 201509080
(43) Date of publication of application: 25.01.2017
(73) Proprietor: Tirsan Kardan Sanayi Ve Ticaret Anonim Sirketi, 45030 Manisa (TR)
(72) Inventor: TASAN, Korkut, 45030 Manisa (TR); SIMSAROGLU, Ferit, 45030 Manisa (TR)
(74) Representative: Yamankaradeniz, Kemal

(56) References cited:
- EP-A1- 1 953 398
- WO-A1-98/20263
- WO-A1-2014/167614
- DE-A1- 19 719 641
- DE-A1-102007 018 082
- DE-A1-102012 223 674
- US-A- 5 946 977

## Description

### The Related Art

The invention relates to an alternative joining method in propeller shafts used in torque transmission in automotive sector developed by using riveting instead of welding so as to minimize the negative thermal effects of welded joints of pipe and solid piece.

### The Prior Art

Nowadays, materials used in industrial application products are desired to be assembled/joined homogeneously so as to be durable and be economical. The piece that is compatible for industry is formed as a result of assembly of one or more pieces and materials via welding process.

The welding process is combining two or more materials in a permanent manner by applying an external energy with or without using an external filling material depending on the method of welding. The effects of welding on the material found around the area of welding might be harmful (the size and durability of the area affected by heat may vary depending on the material used and the heat input used during welding operation). The thermal diffusivity (thermal conductivity/volumetric heat capacity) of the material plays an important role in this regard. If diffusivity is high, the material would have high cooling ratio and relatively less area would be affected by the heat. Otherwise, low diffusivity causes slow cooling and leads to a bigger area affected by heat.

The amount of heat generated by welding process is of great importance in methods such as oxy-acetylene welding method, and non-intensified heat input causes enlargement of the area affected from heat. Operations such as laser beam source provide intensified heat to the welding area and the amount of heat is restricted so as to obtain a small area affected from heat. This area obtained is called as heat affected zone (HAZ).

Continuity is obtained by having the same chemical and mechanical characteristics at the welding area and the welded pieces. Required energy in welding process can be provided to the welding area in the form of heat, beam, pressure, or heat+pressure.

In this case, the joining operations made by combining same or different materials are required to have the same chemical and mechanical characteristics and meet the required parameters. The welding area of materials produced by joining via welding is the most critical area in terms of its parameters and characteristics. In case the parameters are not suitable, the welding process may not provide a good result.

One of the commonly used welding methods in heavy metal industry is friction welding. Friction welding is a solid welding method performed by forming plastic deformation at an intermediate surface under axial pressure by means of making use of the heat obtained by converting mechanical energy into thermal energy with the friction formed at the intermediate surfaces of a fixed and a movable piece having rotary motion. However, it causes loss of material, since the sizes are shortened as a result of combination due to welding.

In the process of welding bigger pieces, since heating is not homogeneous, it causes reduction in welding capability, and the increase in the section area of the piece causes increase in engine power pressure values on the machine. Due to these negative effects of the prior art friction welding method, need has occurred for rivet connection.

The application No. WO2015010877 encountered as a result of technical research relates to a method including connection of two materials via a rivet nut. Since the materials used are similar to each other, two materials are combined by means of a single rivet nut operation. However, this method cannot be applied in the shafts of vehicles and materials with big section areas. WO98/20263 A1, on which the preamble of claim 1 is based, shows a rotary power transmission shaft for activating flaps in aircraft wings, wherein a tube and a solid piece are joined together using tubular rivets.

DE19719641 A1 shows a shaft system joined together by a pin which is optionally riveted on one side and held on the other side by a nut and a screw. US5946977 A shows a collapsible steering column, wherein a tubular member is riveted to a solid piece with a plurality of rivets of different types. WO2014/167614 A1 discloses a shaft system, wherein both parts are crimped together. DE102012223674 A1 shows a shaft system, wherein a tubular member is joined together by a set of pins pressed inside corresponding holes within a solid piece. As a result, the above said drawbacks and the inadequacy of the prior art solutions about the subject have necessitated an improvement in the related technical field.

### Purpose of the Invention

The invention is formed with the inspiration from the prior art situations and aims to solve the above said problems.

The primary purpose of the invention is to provide economic advantage by means of eliminating workbench investment, since welding workbench is not needed as welding operation is eliminated.

A purpose of the invention is to eliminate the need for parameter calculation required for joining different materials and thus save from time and labour.

Another purpose of the invention is to provide ease of production.

Another purpose of the invention is to provide economical advantage.

Another purpose of the invention is to ensure continuity in the area of joining by means of eliminating the heat affected zone.

In order to achieve the above said purposes, the invention relates to combination of shaft connections via a stud bolt by means of using reciprocal rivet nuts on the vertical axis in order to eliminate the use of friction welding method on the shaft.

The structural and characteristic features of the invention and all of its advantages shall be understood better with the figures and the detailed description given below in reference to the figures, and therefore, the assessment should be made by taking into account the said figures and detailed explanations.

### Figures for Better Understanding of the Invention

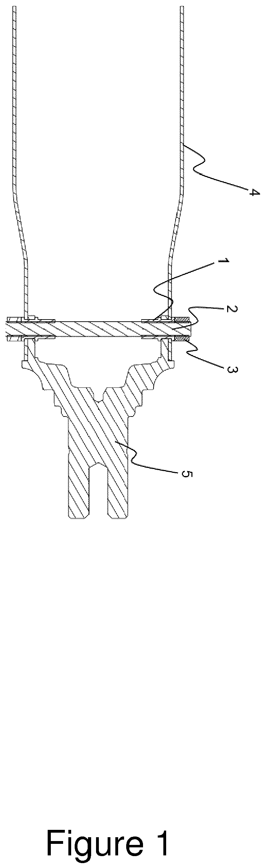

Figure 1 is a view of the rivet connection according to the invention on the shaft.

Drawings do not have to be scaled and details not necessary for understanding the present invention may be neglected. Moreover, components which are at least widely equal or which have at least widely equal functions are shown with the same number.

### Description of Parts References

1. Rivet nut
2. Stud bolt
3. Lock nut
4. tube
5. Solid piece

### Detailed Description of the Invention

In this detailed description, the preferred embodiments of the invention are only disclosed for better understanding of the subject without forming any limiting effect.

Combining of two pieces inseparably with each other by means of a rivet connection component is called riveting. The pieces to be combined are mounted and perforated together in order to prevent axial run-out. Holes are opened on the tube (4) and the solid piece (5), which form the shaft set to be riveted, such that they would correspond to each other on the vertical axis. The tube (4) and the solid piece (5) are engaged to each other and holes suitable for the rivet diameter are then opened on these pieces. The required rivet nut (1) is then passed through the holes opened on the tube (4) and the solid piece (5). The inserted rivet nut (1) is squeezed both radially and circumferentially between the tube (4) and the solid piece (5) by means of forming a bushing-shaped level inside the rivet nut (1) as in its outer part, by means of applying a pulling force by means of a pneumatic riveting gun. According to the invention a stud bolt (2) is inserted between the nuts.

Figure 1 is a view of the rivet connection according to the invention. Said stud bolt (2) has a threaded surface and it is inserted into the tube (4) and the solid piece (5) through the rivet nut (1) having a screwed inner surface. Afterwards, it is fixed by being inserted through the other rivet nut (1) that is found across the rivet nut (1) on the same axis. In this way, in addition to joining between the nuts, strength is also provided against shear and other forces. Following riveting and screwing operations, in order to eliminate possible loosening of parts due to centrifugal force during movement of the structure, lock nuts (3) are squeezed at both ends of the stud bolt (2) inserted through the rivet nuts (1).

## Claims

1. A riveting method for combining/joining a tube (4) and a solid piece (5) having a tubular end portion, adapted to be a shaft system used in vehicles for enabling additional strength against shear forces, **characterized in that**; it comprises the operation steps of:
- following engagement of said pipe (4) and said tubular end portion of the solid piece (5) into each other, forming holes on the same axis on the corresponding surfaces of the tube (4) and the tubular end portion of the solid piece (5) and
- inserting into said holes on the same axis reciprocal rivet nuts (1) having threaded surfaces,
- squeezing the inserted rivet nuts (1) both radially and circumferentially between the tube (4) and the tubular end portion of the solid piece (5), and
- combining the reciprocal rivet nuts (1) by means of passing a stud bolt (2) through them so as to mount the tube (4) and the solid piece (5) to each other.

2. The riveting method according to Claim 1, **characterized in that**; it comprises the operation step of mounting lock nuts (3) at the stud bolt (2) ends in order to prevent loosening of the stud bolt (2) under the impact of centrifugal force during movement of the shaft system.

## Patentansprüche

1. Vernietungsverfahren zum Kombinieren/Verbinden eines Rohres (4) mit einem festen Werkstück (5) mit einem rohrförmigen Endstück, das angepasst ist, um ein Wellensystem zu sein, das zur Ermöglichung zusätzlicher Festigkeit gegenüber Scherkräften in Fahrzeugen verwendet wird, **dadurch gekennzeichnet, dass** es die folgenden Betriebsschritte umfasst:
nach der Ineingriffnahme des Rohrs (4) und des rohrförmigen Endabschnitts des festen Werkstücks (5) ineinander
Formen von Löchern auf derselben Achse auf den entsprechenden Oberflächen des Rohrs (4) und des rohrförmigen Endabschnitts des festen Werkstücks (5) und Einführen von reziproken Nietenmuttern (1) mit Gewindeoberflächen in die Löcher auf derselben Achse, Eindrücken der eingeführten Nietenmuttern (1) sowohl radial als auch in Umfangsrichtung zwischen das Rohr (4) und den rohrförmigen Endabschnitt des festen Werkstücks (5) und
Kombinieren der reziproken Nietenmuttern (1), in dem eine Stiftschraube (2) durch sie geführt wird, um das Rohr (4) und das feste Werkstück (5) aneinander zu montieren.

2. Vernietungsverfahren nach Anspruch 1, **dadurch gekennzeichnet, dass** es den Betriebsschritt des Montierens von Sperrmuttern (3) an den Enden der Stiftschraube (2) umfasst, um ein Lockern der Stiftschraube (2) unter der Einwirkung von Zentrifugalkräften während der Bewegung des Wellensystems zu verhindern.

## Revendications

1. Procédé de rivetage destiné à combiner/lier un tube (4) et une pièce pleine (5) possédant une partie d'extrémité tubulaire, adaptée pour être un système d'arbre utilisé dans des véhicules pour permettre une résistance supplémentaire contre les forces de cisaillement, **caractérisé en ce qu'**il comprend les étapes de fonctionnement de :
- suite à la mise en prise dudit tube (4) et de ladite partie d'extrémité tubulaire de la pièce pleine (5) l'un dans l'autre,
formation de trous sur le même axe sur les surfaces correspondantes du tube (4) et de la partie d'extrémité tubulaire de la pièce pleine (5) et
- insertion dans lesdits trous sur le même axe des écrous à sertir réciproques (1) possédant des surfaces filetées,
- serrage des écrou à sertir insérés (1) radialement et circonférentiellement entre le tube (4) et la partie d'extrémité tubulaire de la pièce pleine (5), et
- combinaison des écrous à sertir réciproques (1) au moyen du passage d'un goujon fileté (2) à travers ceux-ci de façon à monter le tube (4) et la pièce pleine (5) l'un sur l'autre.

2. Procédé de rivetage selon la revendication 1, **caractérisé en ce qu'**il comprend l'étape d'opération de montage des écrous de blocage (3) aux extrémités du goujon (2) afin d'empêcher le desserrage du goujon (2) sous l'effet de la force centrifuge durant le mouvement du système d'arbre.
